Europäisches Patentamt

European Patent Office

Office européen des brevets

(11) Publication number: **0 105 755**
**B1**

(12) **EUROPEAN PATENT SPECIFICATION**

(45) Date of publication of patent specification: **18.04.90**

(51) Int. Cl.⁵: **G 06 F 13/00**

(21) Application number: **83305969.4**

(22) Date of filing: **30.09.83**

(54) Selective accessing in data processing systems.

(30) Priority: **30.09.82 JP 169542/82**

(43) Date of publication of application:
**18.04.84 Bulletin 84/16**

(45) Publication of the grant of the patent:
**18.04.90 Bulletin 90/16**

(84) Designated Contracting States:
**DE FR GB**

(56) References cited:
**EP-A-0 051 905**
**EP-A-0 086 137**

**IEEE TRANSACTIONS ON COMPUTERS, vol.
C-18, no. 12, December 1969, pages 1132-1134,
IEEE, New York, US; O. ABERTH: "A multiple
computer linkage"**
**ELECTRICAL DESIGN NEWS, vol. 25, no. 3,
February 1980, pages 161-165, Denver, US; R.B.
BONNEY: "For Mu-P-system data entry,
thumbwheel switches excel"**

(73) Proprietor: **FUJITSU LIMITED**
**1015, Kamikodanaka Nakahara-ku
Kawasaki-shi Kanagawa 211 (JP)**

(72) Inventor: **Takahashi, Hitoshi
32-28, Kitamachi 2-chome
Nerima-ku Tokyo 176 (JP)**

(74) Representative: **Fane, Christopher Robin King
et al
HASELTINE LAKE & CO. Hazlitt House 28
Southampton Buildings Chancery Lane
London, WC2A 1AT (GB)**

Courier Press, Leamington Spa, England.

## Description

The present invention relates to selective accessing in data processing systems, for example to a system including a semiconductor IC device such as an IC chip of a memory device or an input/output (I/O) control device which is selected and used by an address signal from a central processing unit (CPU).

Generally, in a computer system, a plurality of peripheral circuits such as memory devices and/or I/O control devices are used. Each of the peripheral circuits is constituted of, for example, one peripheral large scale integration (LSI) chip and comprises a memory device or an I/O control circuit which control various I/O devices.

In such a computer system, when, for example, the CPU accesses a peripheral IC chip, it is necessary to input a chip select signal to the chip select terminal of the peripheral IC chip and, thereafter, to input data to or output data from the peripheral IC chip.

Computer systems using conventional peripheral IC devices, however, require an address decoder. Thus, the interface circuit between a CPU and each LSI becomes complex.

Moreover, the address of each peripheral LSI is absolutely determined in correspondance to the structure of the address decoder. Thus, programs designed for one computer system may not be compatible with other computer systems using the same CPU, because the addresses of the peripheral LSI's do not coincide with those of the former computer system. Therefore, software of computer systems using conventional peripheral IC's are not usually interchangeable.

IEEE Transactions on Computers vol. C-18, No. 12: December 1969 pages 1132—1134 describes a system of memory sharing as a means for computer communication. This document discloses a data processing system including at least one integrated circuit device, and a control unit whereby the said device can be accessed through the transmission of an address signal along a signal bus of the system; said device having a store for storing an address code of the device and a comparator for comparing the address code stored in the store with an addressing code received by way of the said signal bus and causing the device to be switched into a selected condition upon detection of coincidence between the received addressing code and the stored address code of the device.

This system has been set up to improve performance during large computational tasks by allowing the control unit to communicate selectively with any of several memories. The system has a limited capability of transferring blocks of words between individual memories since the control unit can alter the address code stored in any particular store. This document does not address the problem of interchanging software, and in fact with the prior art system this problem is likely to be exacerbated because of the need to control the change of the address codes by the control unit.

It is desirable to simplify interface circuits between a CPU and each peripheral chip and to make software between computer systems using the same kind of CPU's interchangeable.

The present invention is characterised in that the system includes address defining means whereby the address code can be defined and from which the defined address code can be transferred via the signal bus to the said store; and a buffer arranged in the signal bus in such a position as selectively to isolate the device and the address defining means from the control unit during an initialising operation when the address code is transferred from the address defining means to the store.

Reference will now be made, by way of example, to the accompanying drawings, in which:—

Figure 1 is a block circuit diagram of a computer system which uses conventional semiconductor IC devices;

Figure 2 is a block circuit diagram of a computer system which uses semiconductor IC devices according to an embodiment of the present invention;

Figure 3 is a block circuit diagram of another computer system which uses semiconuctor IC devices according to an embodiment of the present invention;

Figure 4 is a block circuit diagram of still another computer system which uses semiconductor IC devices according to another embodiment of the present invention; and

Figures 5A and 5B are waveform diagrams of the operation of the system of Fig. 4.

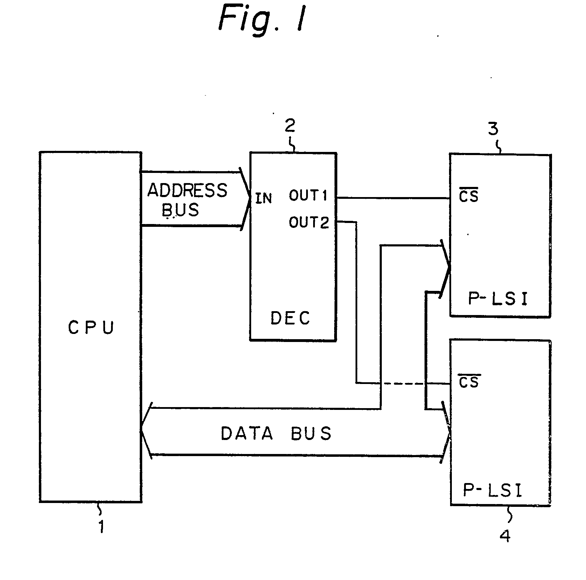

Before describing the preferred embodiments, an explanation will be given of a computer system which uses conventional peripheral semiconductor devices in reference to Fig. 1. The system of Fig. 1 comprises a CPU 1, an address decoder 2, and peripheral LSI's 3 and 4. In the system of Fig. 1, the address decoder 2 constitutes an interface circuit of the CPU 1, the peripheral LSI's 3 and 4, and so on. The peripheral LSI's 3 and 4 and so on are, for example, memory devices, I/O control devices, and so on.

In the system of Fig. 1, an address signal from the CPU 1 is input to the address decoder 2 via an address bus. The address decoder 2 decodes the address signal input thereto and lowers the potential of the chip select terminal $\overline{CS}$ of a peripheral LSI corresponding to the address signal.

For example, when it is necessary to select the peripheral LSI 3, the CPU outputs the address signal which corresponds to the peripheral LSI 3. The address decoder 3 receives this address signal and lowers the potential of only the $\overline{CS}$ terminal of the peripheral LSI 3. Thereby, the peripheral LSI 3 is selected, and the delivery of data between the peripheral LSI 3 and the CPU 1 is effected via the data bus.

In this way, a peripheral LSI is selected by outputting an address signal which corresponds to the peripheral LSI from the CPU 1, and the I/O operation and so on are performed.

As mentioned earlier, this system has the disadvantages of a complex interface circuit and of lack of software interchangeability.

According to an embodiment of the invention, a semiconductor IC device is an LSI comprising an input buffer, an address memory, and a comparator.

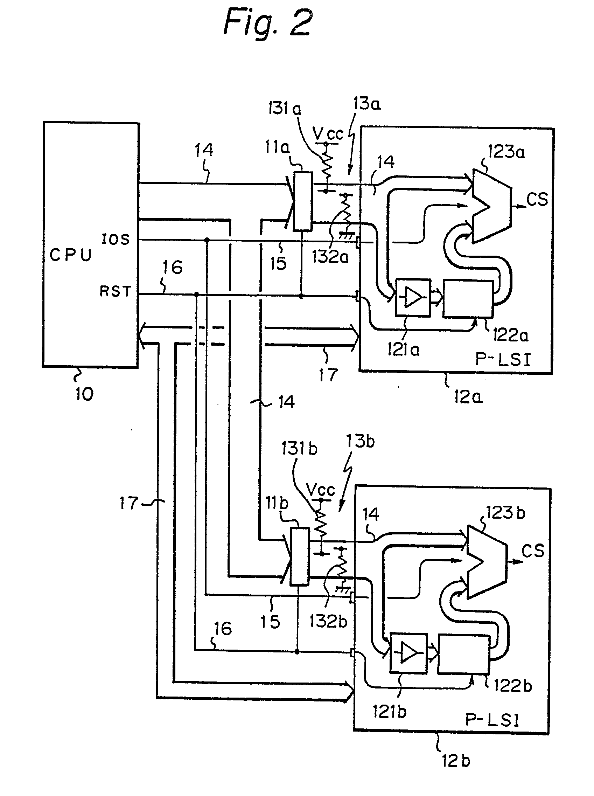

Figure 2 illustrates an example of a computer system which uses semiconductor IC devices according to a first embodiment of the present invention. The computer system of Fig. 2 is composed of a CPU 10, bus buffers 11a and 11b, peripheral LSI's 12a and 12b, address setting circuits 13a and 13b, and so on. The bus buffers 11a and 11b are inserted midway of a bus line 14, for example, an address bus, which connects the CPU 10 and the peripheral LSI's 12a and 12b. The CPU 10 is connected to the semiconuctor IC devices, i.e., peripheral LSI's 12a and 12b, via a data bus 17, an I/O selecting line 15, and a reset signal line 16 in addition to the bus line 14.

In Fig. 2, only two peripheral LSI's are illustrated. However, in practice, it is possible to connect more than two peripheral LSI's to the CPU 10 via the bus line 14, the I/O selecting line 15, the reset signal line 16 and the data bus 17. The peripheral LSI's 12a and 12b comprise input buffers 121a and 121b, address memories 122a and 122b, and comparators 123a and 123b which are connected to the bus line 14, respectively.

The address setting circuit 13a comprises one or more resistors 131a and/or one or more resistors 132a. The resistors 131a are connected between a power source $V_{cc}$ and one or more signal lines corresponding to predetermined bits of the bus line 14 having a plurality of signal lines. The resistors 132a are connected between one or more signal lines corresponding to the other bits of the bus line 14 and the ground. Therefore, these resistors of the address setting circuit 13a serve to add a high level voltage or a low level voltage to the signal lines corresponding to predetermined bits, thereby inputting a predetermined address signal to the peripheral LSI 12a.

The address setting circuit 13b also comprises one or more resistors 131b and/or one or more resistors 132b. The resistors 131b are connected between a power source $V_{cc}$ and one or more signal lines corresponding to predetermined bits of the bus line 14. The resistors 132b are connected between one or more signal lines corresponding to the other bits of the bus line 14 and the ground, thereby inputting a predetermined address signal to the peripheral LSI 12b.

In the computer system of Fig. 2, the reset signal line 16 connected to a reset terminal RST of the CPU 10 is rendered to an active status, for example, a high potential level, when the initial setting of the computer system is effected, for example, when the power source to the computer system is turned on. Thereby, the bus buffers 11a and 11b enter a turned-off state, and the CPU 10 and peripheral portions such as the peripheral LSI's 12a and 12b are separated.

Therefore, address signals are transmitted to the peripheral LSI's 12a and 12b from the address setting circuits 13a and 13b, respectively which are connected to the bus line 14 on the side of the peripheral LSI's 12a and 12b. That is, among the signal lines of the bus line 14 corresponding to each bit of the address signal, the signal lines pulled up to the power source $V_{cc}$ via the resistors 131a and 131b become high and the signal lines connected to the ground via the resistors 132a and 132b become low.

The address signals applied to the bus line 14 in this manner are transmitted to the address memories 122a and 122b via the internal buffers 121a and 121b of the peripheral LSI's 12a and 12b and stored therein as the logical numbers of the peripheral LSI's 12a and 12b, respectively. In this case, the logical numbers are written into the address memories and 122a and 122b by rendering them to a write-in status by the reset signal supplied via the reset signal line 16.

When the CPU 10 accesses one of the peripheral LSI's after the logical number, i.e., the address of each peripheral LSI, is stored in the above-mentioned manner, an address of a peripheral LSI is transmitted from the CPU 10 via the bus line 14 and the potential of the I/O selecting line 15 is rendered high, so that the I/O selecting signal becomes active. In each of the peripheral LSI's, the comparator 123a or 123b is enabled and compares the address data input from the CPU 10 and its own logical number read out from the address memory 122a or 122b.

That is, the CPU 10 informs the comparators 123a and 123b that the data on the bus line 14 at present is the address data supplied to the peripheral LSI's, by rendering the potential of the I/O line 15 high.

If, for example, in the peripheral LSI 12a, the aforementioned two data coincide with each other when the comparison by the comparator 123a is effected, the comparator 123a outputs a coincidence signal, i.e., a chip select signal CS which is supplied to the chip select terminal of a peripheral circuit which is provided in the peripheral LSI (not shown). In this way, the address data transmitted from the CPU 10 and the logical number stored in each peripheral LSI is compared, and the peripheral LSI whose logical number coincides with the address data is selected, whereby I/O operation by the peripheral LSI is effected. It should be noted that it is possible to utilize either a data bus or an address bus as the bus line 14.

It should be noted that, in the system of Fig. 2, it is not necessary to use the I/O selecting signal supplied from the IOS terminal of the CPU 10, when each peripheral LSI and memory device connected to the CPU 10 is selected by address signals in the same address space.

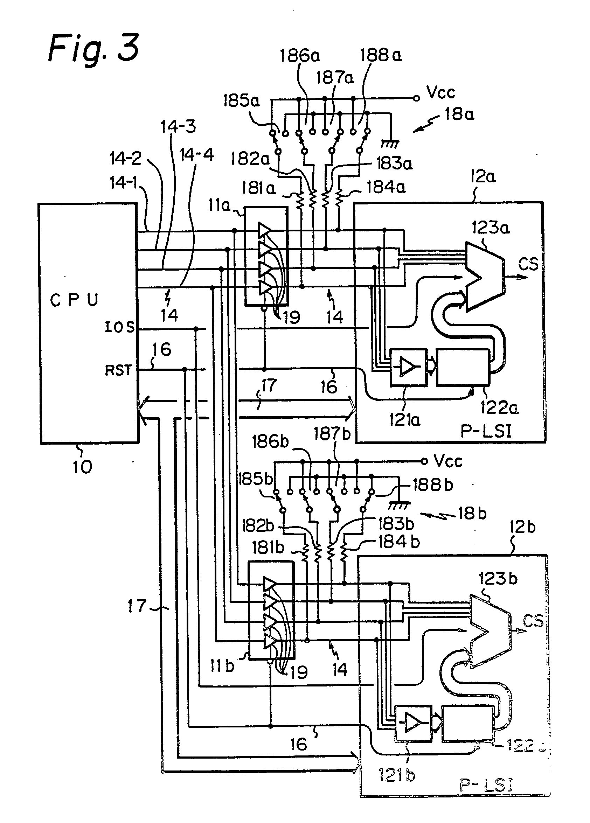

Figure 3 illustrates another computer system which uses semiconductor IC devices according to an embodiment of the present invention. Parts similar to those in Fig. 2 are given the same reference numerals.

The difference between the systems of Figs. 2 and 3 is that address setting circuits 18a and 18b are used instead of circuits 13a and 13b. The address setting circuit 18a comprises resistors 181a thorugh 184a and switches 185a through 188a. The address setting circuit 18b comprises resistors 181b through 184b and switches 185b through 188a. The bus line 14 thus comprises, for example, four signal lines 14-1, 14-2, 14-3, and 14-4. Each of bus buffers 11a and 11b similarly comprises four buffer amplifiers 19 connected to the signal lines 14-1, 14-2, 14-3, and 14-4, respectively, each of which is activated depending on the reset signal sent from the CPU 10 via the reset signal line 16.

In the system of Fig. 3, the logical number of each of the peripheral LSI's 12a and 12b is changeable by the switches 185a through 188a of the address setting circuit 18a or the switches 185b through 188b of the address setting circuit 18b. When the reset signal is active at the initial setting status, all the buffer amplifiers 19 in each of the address setting circuits 11a and 11b are turned off. The address setting circuits 18a and 18b transmit address signals to the peripheral LSI's 12a and 12b. The contents of the address signals, i.e., the logical numbers of the peripheral LSI's 12a and 12b, are determined by the condition of the switches 185a through 188a and the switches 185b through 188b.

According to a second embodiment, the semiconductor IC device is an LSI comprising an input buffer, an address memory, a comparator, a flip-flop, inverters, and a data buffer.

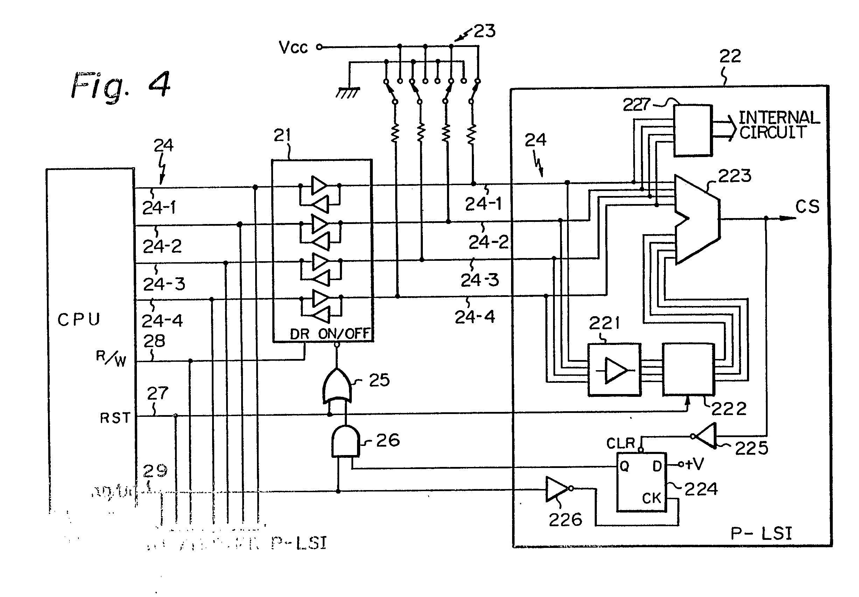

Figure 4 illustrates an example of a computer system which uses semiconductor IC devices according to this second embodiment of the present invention. The computer system of Fig. 4 comprises a CPU 20, a bus buffer 21, a peripheral LSI 22, an address setting circuit 23, an OR gate 25, and an AND gate 26. In the system of Fig. 4, a common bus line 24 is used as an address bus and a data bus in a time division manner depending on the potential level of a bus switching signal AD/DT. The bus line 24 comprises, for example, four signal lines 24-1, 24-2, 24-3 and 24-4 which connect the CPU 20 and the peripheral LSI 22 via the bus buffer 21.

In Fig. 4, only one peripheral LSI 22, one bus buffer 21, and so on are illustrated. However, in practice, a plurality of peripheral LSI's and so on can be connected to the CPU 20.

The bus buffer 21 comprises dual-direction three-state buffer circuits which are controlled by a direction signal DR and an ON/OFF signal.

The peripheral LSI 22 comprises an input buffer 221, an address memory 222, a comparator 223, the same as in the first embodiment, and further comprises a flip-flop 224, inverters 225 and 226, and a data buffer 227 inserted between the bus line 24 and internal circuits (not shown) of the peripheral LSI 22.

The address setting circuit 23 is the same as that of Fig. 3.

In the system of Fig. 4, a reset signal on a reset signal line 27 connected to the reset terminal RST of the CPU 20 is rendered to, for example, high when the initial setting of the computer system is effected. The reset signal is supplied to the ON/OFF terminal of the bus buffer 21 via the OR gate 25, whereby the bus buffer 21 enters a turned-off state and the CPU 20 and the peripheral LSI 22 are separated. Therefore, an address signal, i.e., a logical number, is transmitted from the address setting circuit 23 to the address memory 222 and stored therein in a manner similar to the computer system of Fig. 3.

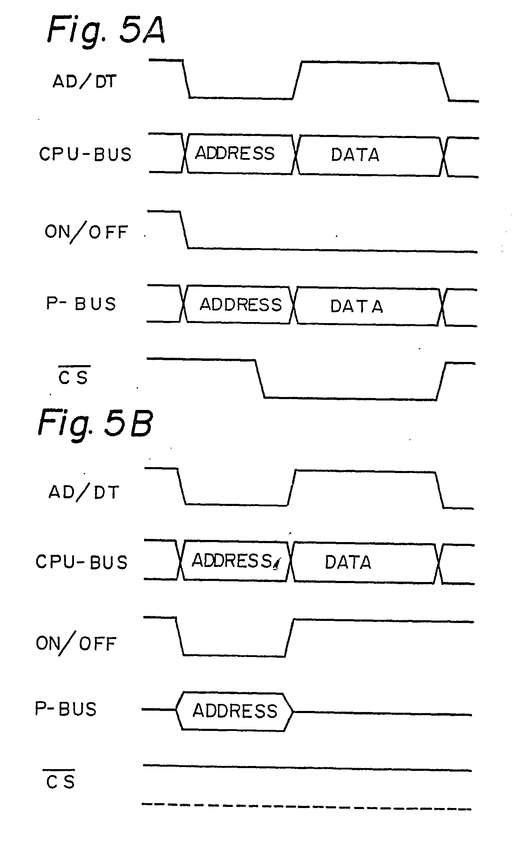

Figures 5A and 5B illustrate signals of each portion in the system of Fig. 4 in the cases where the CPU 20 accesses the peripheral LSI 22 when it is and is not selected, respectively. When the CPU 20 accesses one of the peripheral LSI's connected thereto after the logical numbers are preset therein in the above-mentioned manner, the CPU 20 renders the bus switching signal AD/DT to low and sends out an address of a peripheral LSI on a CPU bus, i.e., on the portion of the bus line connected to the CPU 20. Since the output signal of the AND gate is low and the ON/OFF signal is low, the bus buffer 21 enters a turned-on state. The direction signal DR is rendered, for example, high and the three-state buffer circuits in the bus buffer 21 are activated, so that signals are transmitted from the side of the CPU 20 to the side of the peripheral LSI 22. Therefore, the address signal sent from the CPU 20 is input to the comparator 223 and compared with the logical number stored in the address memory 222.

If the content of the address signal coincides with the logical number, the comparator 223 renders the chip select signal CS to high, so that the peripheral LSI 22 is selected. Therefore, the inverted chip select signal $\overline{CS}$, i.e., the output signal of the inverter 225 becomes low, as illustrated in Fig. 5A. Next, the CPU 20 renders the bus switching signal AD/DT high and sends out or receives data via the bus line 24. Since the inverted chip select signal $\overline{CS}$ supplied to a clear terminal CLR of the flip-flop 224 is low, the output signal (Q) of the flip-flop 224 is low. Therefore, the output signal of the AND gate 26 and the output signal of the OR gate 25· are low, and the ON/OFF signal is retained in a low potential level.

If the content of the aforementioned address signal sent from the CPU 20 does not coincide with the logical number, the comparator 223 renders the chip select signal CS to low, so that the peripheral LSI 22 is not selected. In this status, when the CPU 20 renders the bus switching signal AD/DT to high, the output of the flip-flop 224 becomes high and the output signal of the AND gate 26 becomes high. Therefore, the ON/OFF signal becomes high and the bus buffer 21 are turned off, so that the data sent from the CPU 20 is not transmitted to the peripheral LSI 22, as illustrated in Fig. 5B.

In the system of Fig. 4, it is not necessary to provide extra pin terminals in each peripheral LSI for inputting a logical number thereto, because the logical number is input thereto via pin terminals used for transmitting data signals.

As mentioned in the description of the embodiments above it is not necessary to use hardware such as an address decoder and so on used in a conventional computer system. Also, the interface circuits between a central processing unit and peripheral circuits can be simplified. Since the number of peripheral LSI's is usually not large, it is not necessary to connect signal lines corresponding to all bits of a bus line which connects the central processing unit and the peripheral LSI's to the peripheral LSI's. It is only necessary to connect the signal lines of the bit numbers, e.g., four, determined by the number of the peripheral LSIs to the peripheral LSI. Therefore, it is possible to decrease the number of connections between the CPU and the peripheral circuits. When switches are provided in the address setting circuit for connecting the resistor pattern coupled to each signal line to a power source or the ground, it is possible to set any logical number to each peripheral LSI so that the logical number coincides with the logical number determined in each of the programs executed by the CPU. Therefore, it is possible to make many programs for computer systems using the same CPU interchangeable.

## Claims

1. A data processing system including: at least one integrated circuit device (12a), and a control unit (10) whereby the said device (12a) can be accessed through the transmission of an address signal along a signal bus (14) of the system; said device (12a) having a store (122a) for storing an address code of the device and a comparator (123a) for comparing the address code stored in the store (122a) with an addressing code received by way of the said signal bus and causing the device (12a) to be switched into a selected condition upon detection of coincidence between the received addressing code and the stored address code of the device, characterised in that said system includes address defining means (13a) whereby the address code can be defined and from which the defined address code can be transferred via said signal bus (14) to the said store (122a); and a buffer (11a) arranged in the signal bus in such a position as selectively to isolate the device (12a) and the address defining means (13a) from the control unit (10) during an initialising operation when the address code is transferred from the address defining means (13a) to the store (122a).

2. A system as claimed in claim 1, which comprises a plurality of such devices (12a), each device including a respective store and comparator, and a corresponding plurality of buffers associated respectively therewith whereby respective individual address codes can be transferred selectively to the said stores during the initialising operation.

3. A system as claimed in claim 1 or 2, in which the or each integrated circuit device (12a) includes its respective store and comparator as part of its integrated circuitry.

4. A system according to claim 1, 2 or 3, wherein said address defining means (13a) comprises at least one resistor (131a) connected between a signal line in said signal bus and a voltage source or between said signal line and ground.

5. A system according to claim 1, 2 or 3, wherein said address defining means (18a) comprises at least one resistor (181a) and at least one switch (185a) which selectively connects said at least one resistor to a voltage source or ground.

6. A system according to any preceding claim, which is such that the or each store (122a) is rendered to a write-in status and the buffer is simultaneously turned off by a reset signal sent from said central processing unit (10) in said initialising operation, thereby transferring the address code from said address defining means to said store (122a).

## Patentansprüche

1. Datenverarbeitungssystem mit: wenigstens einer integrierten Schaltungseinrichtung (12a) und einer Steuereinheit (10), wodurch zu der genannten Einrichtung (12a) durch die Transmission eines Adreßsignals längs einem Signalbus (14) des Systems zugegriffen werden kann; wobei die genannte Einrichtung (12a) einen Speicher (122a) zum Speichern eines Adreßcodes der Einrichtung und einen Komparator (123a) zum Vergleichen des in dem Speicher (122a) gespeicherten Adreßcodes mit einem Adreßcode hat, der über den genannten Signalbus empfangen wurde, und um zu bewirken, daß die Einrichtung (12a) bei Detektion einer Koinzidenz zwischen dem empfangenen Adreßcode und dem gespeicherten Adreßcode der Einrichtung in einen ausgewählten Zustand geschaltet wird, dadurch gekennzeichnet, daß das System eine Adreßdefinitionseinrichtung (13a) umfaßt, wodurch der Adreßcode definiert werden kann und von welcher der definierte Adreßcode über den genannten Signalbus (14) zu dem genannten Speicher (122a) übertragen werden kann; und einen Puffer (11a), der in dem Signalbus in solch einer Position angeordnet ist, um selektiv die Einrichtung (12a) und die Adreßdefinitionseinrichtung (13a) von der Steuereinheit (10) während eines Initialisierungsbetriebs zu isolieren, wenn der Adreßcode von der Adreßdefinitionseinrichtung (13a) zu dem Speicher (122a) übertragen wird.

2. System nach Anspruch 1, welches eine Vielzahl von solchen Einrichtungen (12a) umfaßt, wobei jede Einrichtung einen entsprechenden Speicher und Komparator umfaßt, und eine entsprechende Vielzahl von Puffern, die jeweils diesen zugeordnet sind, wodurch jeweils individuelle Adreßcode während des Initialisierungsbetriebes selektiv zu den genannten Speichern übertragen werden können.

3. System nach Anspruch 1 oder 2, bei dem die oder jede integrierte Schaltungseinrichtung (12a) ihren jeweiligen Speicher und Komparator als Teil ihrer integrierten Schaltung enthält.

4. System nach Anspruch 1, 2 oder 3, bei dem die genannte Adreßdefinitionseinrichtung (13a) wenigstens einen Widerstand (131a) umfaßt, der zwischen einer Signalleitung in dem genannten Signalbus und einer Spannungsquelle oder zwischen der genannten Signalleitung und Erde verbunden ist.

5. System nach Anspruch 1, 2 oder 3, bei dem die genannte Adreßdefinitionseinrichtung (18a) wenigstens einen Widerstand (181a) und wenigstens einen Schalter (185a) umfaßt, welcher selektiv den genannten wenigstens einen Widerstand mit einer Spannungsquelle oder Erde verbindet.

6. System nach einem der vorhergehenden Ansprüche, welches derart ist, daß durch ein Rücksetzsignal, welches von der zentralen Prozessoreinheit (10) bei dem genannten Initialisierungsbetrieb ausgesendet wird, der oder jeder Speicher (122a) in einen Einschreibzustand versetzt wird, und der Puffer gleichzeitig abgeschaltet wird, wodurch der Adreßcode von der genannten Adreßdefinitionseinrichtung zu dem genannten Speicher (122a) übertragen wird.

**Revendications**

1. Système de traitement de données incluant: au moins un dispositif de circuit intégré (12a) et une unité de commande (10) par laquelle le dispositif (12a) peut faire l'objet d'un accès par la transmission d'un signal d'adresse le long d'un bus de signaux (14) du système; le dispositif (12a) comportant une mémoire (122a) pour mémoriser un code d'adresse du dispositif et un comparateur (123a) pour comparer le code d'adresse mémorisé dans la mémoire (122a) à un code d'adressage reçu au moyen du bus de signaux et faisant en sorte que le dispositif (12a) soit commuté dans un état sélectionné lors de la détection d'une coïncidence entre le code d'adressage reçu et le code d'adresse mémorisé du dispositif, caractérisé en ce que le système comprend un moyen de définition d'adresse (13a) par lequel le code d'adresse peut être défini et à partir duquel le code d'adresse défini peut être transféré par le bus de signaux (14) jusqu'à la mémoire (122a); et un tampon (11a) disposé sur le bus de signaux à une position telle qu'il isole sélectivement le dispositif (12a) et le moyen de définition d'adresse (13a) de l'unité de commande (10) pendant une opération d'initialisation quand le code d'adresse est transféré du moyen de définition d'adresse (13a) à la mémoire (122a).

2. Système selon la revendication 1, qui comprend un ensemble des dispositifs (12a), chaque dispositif incluant une mémoire et un comparateur respectifs, et un ensemble correspondant de tampons associés respectivement à ceux-ci par lesquels des codes d'adresse individuels respectifs peuvent être transférés sélectivement jusqu'aux mémoires pendant l'opération d'initialisation.

3. Système selon l'une quelconque des revendications 1 et 2, dans lequel le ou chaque dispositif de circuit intégré (12a) comprend sa mémoire et son comparateur respectifs comme partie de ses circuits intégrés.

4. Système selon l'une quelconque des revendications 1 à 3, dans lequel le moyen de définition d'adresse (13a) comprend au moins une résistance (13a) connectée entre une ligne de signaux du bus de signaux et une source de tension ou entre la ligne de signaux et la masse.

5. Système selon l'une quelconque des revendications 1 à 3, dans lequel le moyen de définition d'adresse (18a) comprend au moins une résistance (181a) et au moins un commutateur (185a) qui relie sélectivement ladite résistance au moins à une source de tension ou à la masse.

6. Système selon l'une quelconque des revendications 1 à 5, qui est tel que la ou chaque mémoire (122a) est mise dans un état d'écriture et le tampon est mis hors circuit simultanément par un signal de remise à l'état initial envoyé par l'unité centrale de traitement (10) dans l'opération d'initialisation, en transférant ainsi le code d'adresse du moyen de définition d'adresse à la mémoire (122a).

# Fig. 1

# Fig. 2

EP 0 105 755 B1

# Fig. 3

3

Fig. 4

EP 0 105 755 B1

*Fig. 5A*

| | |
|---|---|
| AD/DT | |
| CPU-BUS | ADDRESS DATA |
| ON/OFF | |
| P-BUS | ADDRESS DATA |
| $\overline{CS}$ | |

*Fig. 5B*

| | |
|---|---|
| AD/DT | |
| CPU-BUS | ADDRESS DATA |
| ON/OFF | |
| P-BUS | ADDRESS |
| $\overline{CS}$ | |

5